Europäisches Patentamt

European Patent Office

Office européen des brevets

(19)

(11) Veröffentlichungsnummer: **0 084 132**
B1

(12) # EUROPÄISCHE PATENTSCHRIFT

(45) Veröffentlichungstag der Patentschrift:
27.03.85

(51) Int. Cl.⁴: **C 09 J 3/14, C 09 D 5/02**

(21) Anmeldenummer: 82111689.4

(22) Anmeldetag: 16.12.82

(54) Thermoreversible Verdickung von Polymer-Dispersionen.

(30) Priorität: 16.01.82 DE 3201193

(43) Veröffentlichungstag der Anmeldung:
27.07.83 Patentblatt 83/30

(45) Bekanntmachung des Hinweises auf die Patenterteilung:
27.03.85 Patentblatt 85/13

(84) Benannte Vertragsstaaten:
AT BE CH DE FR GB IT LI NL SE

(56) Entgegenhaltungen:
EP - A - 0 038 127
DE - A - 2 142 770
FR - A - 2 103 858
FR - A - 2 143 871
GB - A - 1 150 283

(73) Patentinhaber: BASF Aktiengesellschaft,
Carl-Bosch-Strasse 38, D-6700 Ludwigshafen (DE)

(72) Erfinder: Aydin, Oral, Dr., Sophienstrasse 14,
D-6800 Mannheim (DE)
Erfinder: Straub, Ferdinand, Dr., Ziegelstrasse 20,
D-6832 Hockenheim (DE)
Erfinder: Fickelsen, Peter, Hauptstrasse 45,
D-6716 Dirmstein (DE)

## Beschreibung

Erwärmt man in üblicher Weise hergestellte wäßrige emulgatorhaltige Polymer-Dispersionen von Raumtemperatur auf 40°C, so nimmt deren Viskosität geringfügig, d. h. im Bereich von z. B. 20 auf 15 mPas ab. Bringt man derartige Polymer-Dispersionen in üblicher Weise, z. B. durch Streichen, Rakeln oder Spritzen auf Substrate auf, beispielsweise um Verklebungen herzustellen, so weist die Beschichtung zunächst die Viskosität der aufgebrachten Polymer-Dispersionen auf, und die Viskosität erhöht sich zunehmend beim Trocknen. Dieser Vorgang der Viskositätszunahme ist bei manchen Anwendungsgebieten für Polymer-Dispersionen z. B. beim Aufkleben von Etiketten auf Flaschen, zu langwierig, wodurch die Verarbeitungsgeschwindigkeit nachteilig beeinflußt wird. Auf dem Gebiet der Anstrichmittel setzt man daher als Bindemittel zum Teil Polymer-Dispersionen ein, die Zusätze an Thioxotropierungsmitteln enthalten. Hierdurch kann in der Praxis ein Abtropfen und Ablaufen von Dispersions-Farbanstrichen vermieden werden. Setzt man jedoch Thixotropierungsmittel zu Polymer-Dispersionen, die als Klebstoffe beim Etikettieren von z. B. Flaschen eingesetzt werden sollen, so können diese praktisch nicht auf schnellaufenden Etikettiermaschinen verarbeitet werden, da wegen der auftretenden hohen Schergeschwindigkeit keine Haftungserhöhung unmittelbar beim Aufbringen der mit dem Klebstoffauftrag versehenen Etiketten stattfindet.

Aufgabe der vorliegenden Erfindung ist nun ein Verfahren zum Beschichten von Substraten durch Aufbringen einer wäßrigen Polymer-Dispersion auf ein Substrat in an sich üblicher Weise, wobei eine sprunghafte Erhöhung der Viskosität unmittelbar beim Aufbringen auf das Substrat auftritt.

Es wurde nun gefunden, daß man Substrate durch Aufbringen einer wäßrigen emulgatorhaltigen Polymer-Dispersion auf das Substrat in an sich üblicher Weise, wobei die Temperaturen des Substrats und der Polymer-Dispersion voneinander verschieden sind, und Trocknen des beschichteten Substrats vorteilhaft beschichten kann, wenn die Polymer-Dispersion 1 bis 10% ihres Gewichts eines N-Vinyllactampolymerisats mit inverser Löslichkeit in Wasser enthält und eine Temperatur oberhalb der Temperatur $T_{vs}$ aufweist, bei der sich ihre Viskosität sprunghaft ändert, und die Temperatur des Substrats unterhalb von $T_{vs}$ liegt. Das Verfahren kann mit praktisch allen üblichen emulgatorhaltigen Polymer-Dispersionen durchgeführt werden, d. h. mit anionische, kationische oder nichtionische Emulgatoren enthaltenden Polymer-Dispersionen. Schutzkolloid-Dispersionen, d. h. wäßrige Polymer-Dispersionen, zu deren Herstellung wie bei Polyvinylacetat-Dispersionen üblich, hochmolekulare Schutzkolloide, wie Polyvinylalkohole oder Hydroxyalkylcellulosen, nicht aber Emulgatoren eingesetzt wurden, und solche wäßrige Polymer-Dispersionen, zu deren Herstellung weder Schutzkolloide noch Emulgatoren verwendet wurden, sind dagegen für das neue Verfahren im allgemeinen, d. h. wenn z. B. auch nach der Polymerisation keine Emulgatoren bzw. Seifen wie z. B. Alkylsulfate, Alkarylsulfonate, oder gegebenenfalls sulfatierte Polyalkoxyalkylphenole zugegeben wurden, nicht geeignet. Die Polymerisate der Polymer-Dispersionen können die übliche Zusammensetzung aufweisen und sich z. B. von Acryl- und/oder Methacrylsäureestern geradkettiger oder verzweigter Alkanole, die meist 1 bis 10, insbesondere 4 bis 8 C-Atome aufweisen, von vinylaromatischen Monomeren, wie besonders Styrol; von Vinylestern 2 bis 10, insbesondere 2 bis 4 C-Atome enthaltender Carbonsäuren, wie besonders Vinylacetat und Vinylpropionat, Vinyl- und/oder Vinylidenhalogeniden und/oder 1,3-Diolefinen, wie besonders Butadien, ableiten. In Anteilen von im allgemeinen 0,1 bis 6, insbesondere von 1 bis 5 Gew.-%, bezogen auf die gesamten Monomeren, können die Emulsionscopolymerisate auch $\alpha,\beta$-monoolefinisch ungesättigte, vorzugsweise 3 bis 6 C-Atome enthaltende Mono- und/oder Dicarbonsäuren und/oder deren gegebenenfalls durch N-Methylolgruppen substituierte Amide, wie vorzugsweise Acrylsäure, Methacrylsäure, Acryl- und Methacrylamid, N-Methylolacrylamid und Malein- oder Itaconsäure einpolymerisiert enthalten. Von besonderem Interesse ist das neue Verfahren für solche Polymer-Dispersionen, die Klebstoffeigenschaften aufweisen, insbesondere für solche, die als Etikettierkleber geeignet sind. Hierfür besonders geeignet sind Polymer-Dispersionen, deren Polymerisate sich aus Acrylsäureestern, insbesondere aus n-Butyl-, Isobutyl- und 2-Ethylhexylacrylat, Vinylestern, wie besonders Vinylacetat, Vinylpropionat und Vinyllaurat, Ethylen, Styrol und Butadien und deren Gemischen aufbauen. Die Konzentration der Polymer-Dispersionen liegt im allgemeinen im Bereich von 40 bis 70, insbesondere von 40 bis 60 Gew.-% Polymeriat, bezogen auf die Polymer-Dispersion.

Die N-Vinyllactampolymerisate sollen in Wasser inverse Löslichkeit aufweisen, d. h. ihre Löslichkeit in Wasser soll mit zunehmender Temperatur abnehmen. Infrage hierfür kommen z. B. Polyvinylcaprolactam (K-Wert von 20 bis 120, insbesondere von 40 bis 100), Copolymerisate von 5 bis 50 Gew.-Teilen Vinylpyrrolidon und 95 bis 50 Gew.-Teilen Vinylcaprolactam (K-Wert von 20 bis 120), Copolymerisate von 99 bis 60, insbesondere von 98 bis 80 Gew.-Teilen Vinylpyrrolidon und 1 bis 40, insbesondere von 2 bis 20 Gew.-Teilen Ester der Acryl- und/oder Methacrylsäure mit 1 bis 8 C-Atomen enthaltenen Alkanolen, wie besonders n-Butylacrylat und -methacrylat und Methylacrylat, Copolymerisate des Vinylpyrrolidons mit Vinylacetat, die zu 20–80% zu Hydroxylgruppen verseift wurden, sowie Copolymerisate des Vinylcaprolactams mit 1 bis 20 Gew.-% Acrylsäure und/oder Methacrylsäure oder deren wasserlöslichen Salzen und/oder Acrylamid und/oder Methylacrylamid. Die Menge an derartigen Vinyllactampolymerisaten soll im allgemeinen zwischen 0,5 bis 50, vorzugsweise 1 bis 20 Gew.-%, bezogen auf das in der Polymer-Dispersion enthaltene Wasser, betragen.

Gemische aus Polymer-Dispersionen und den angegebenen Mengen an den N-Vinyllactampolymerisaten sind bei Raumtemperatur hochviskos. Ihre Viskosität nimmt von einer für ein bestimmtes Gemisch bestimmten Temperatur an sprunghaft ab und ist oberhalb dieser Temperatur nur wenig von der Viskosität der eingesetzten Polymer-Dispersion (ohne N-Vinyllactampolymerisat-Zusatz) verschieden. Im allgemeinen beträgt der Temperaturbereich dieses Viskositätssprunges weniger als 5°C, meist nur etwa 2°C. Die Temperatur des Viskositätssprungs hängt von der eingesetzten Polymer-Dispersion und dem eingesetzten N-Vinyllactampolymerisat ab. Der Bereich der sprunghaften Viskositäts-Veränderung soll im allgemeinen bei Temperaturen zwischen 5 und 80, insbesondere von 5 bis 50°C liegen. Die Viskositätsänderung beim Viskositätssprung beträgt im allgemeinen mindestens 500 mPa · s. Demgegenüber ändert sich die Viskosität bei Gemischen aus Polymer-Dispersionen und herkömmlichen Verdickungsmitteln bei Temperaturänderungen von 5°C im allgemeinen nur sehr wenig, z. B. 10 bis 50 mPa · s und nicht sprunghaft. Der Viskositätssprung bei den Gemischen aus den Polymer-Dispersionen und den N-Vinyllactampolymerisaten mit inverser Löslichkeit ist reversibel.

Bei dem erfindungsgemäßen Verfahren wird das Gemisch aus der emulgatorhaltigen Polymer-Dispersion und dem N-Vinyllactam-Polymerisat mit einer Temperatur in das Beschichtungsverfahren eingesetzt, die oberhalb der Temperatur $T_{vs}$, d. h. der Temperatur des Viskositätssprungs, liegt, bei der sich seine Viskosität sprunghaft ändert. Das Substrat, auf das das Gemisch aufgebracht wird, soll dabei eine Temperatur aufweisen, die unterhalb der Temperatur $T_{vs}$ des Polymer-Dispersions-Gemisches liegt. Es ist auch möglich, zunächst das Gemisch aus der emulgatorhaltigen Polymer-Dispersion und dem N-Vinyllactampolymerisat bei einer Temperatur, die oberhalb $T_{vs}$ liegt, auf ein Substrat, dessen Temperatur gleichfalls oberhalb $T_{vs}$ liegt, aufzubringen und das so beschichtete Substrat dann mit seiner beschichteten Seite auf ein weiteres Substrat aufzubringen, dessen Temperatur jedoch unterhalb $T_{vs}$ liegt. Das neue Verfahren hat besonderen Vorteil beim Einsatz derartiger Gemische aus Polymer-Dispersionen und N-Vinyllactampolymerisaten in schnellaufenden Etikettiermaschinen. Hierbei werden zunächst die gegebenenfalls auf eine Temperatur oberhalb $T_{vs}$ vorerwähnten Etiketten mit einer wäßrigen Klebstoffpolymer-Dispersion, die ein N-Vinyllactampolymerisat enthält und die auf eine Temperatur oberhalb $T_{vs}$ erwärmt ist, beschichtet und dann z. B. auf Flaschen, deren Oberflächen Temperaturen unterhalb $T_{vs}$ aufweisen, maschinell aufgebracht. Die Temperaturdifferenz des Gemisches aus den Polymer-Dispersionen und den N-Vinyllactampolymerisaten bei ihrem Einsatz, gemessen gegen $T_{vs}$ einerseits und die Temperaturdifferenz zwischen der Oberflächentemperatur des zu beschichtenden Substrats und $T_{vs}$ andererseits können im allgemeinen gering gehalten werden, d. h. im allgemeinen reichen hierfür jeweils 10"C, insbesondere 2 bis 5°C aus. Maßgebend für die jeweiligen Temperaturdifferenzen ist vor allem die Schichtdicke des Auftrags des Gemisches aus der Polymer-Dispersion und dem N-Vinyllactampolymerisat. Diese Aufträge haben meist Stärken von 2 bis 100 μm und Gemische aus Klebstoff-Polymer-Dispersionen und den N-Vinyllactampolymerisaten werden vorzugsweise in Schichtdicken von 5 bis 100 μm auf die Substrate aufgetragen . Soweit die Polymeren der Polymer-Dispersion Carboxylgruppen, z. B. durch einpolymerisierte $\alpha,\beta$-olefinisch ungesättigte Mono- und/oder Dicarbonsäuren wie besonders Acrylsäure, Methacrylsäure oder Itaconsäure, aufweisen, ist es zweckmäßig, bei der Herstellung des Gemisches mit dem N-Vinyllactampolymerisat von einer neutralisierten oder schwach alkalisch eingestellten Polymer-Dispersion auszugehen. Der Temperaturbereich des Viskositätssprunges kann außer durch die Art des N-Vinyllactampolymerisats, dessen Konzentration, die Art und Konzentration der Polymer-Dispersion auch durch Zusätze wie Lösungsmittel, Harze und/oder Füllstoffe beeinflußt werden. Gemische aus Polymer-Dispersionen und den N-Vinyllactampolymerisaten, denen zusätzlich noch wäßrige Harzlösungen, z. B. von Melamin-Formaldehyd- oder Harnstoff-Formaldehyd-Vorkondensaten oder Lösungen von Kohlenwasserstoff-Harzen in z. B. Methylethylketon und/oder Toluol zugesetzt wurden, zeigen zudem eine Viskositätserhöhung bei der Einwirkung von Scherkräften (dilatantes Verhalten), die mit zunehmender Temperatur abnimmt. In manchen Fällen sind daher Zusätze an derartigen Harzlösungen in Mengen von 5 bis 30 Gew.-% gelöstes Harz, bezogen auf das Gewicht der Polymer-Dispersion von Vorteil.

Harzlösungen dieser Art sind bekannt, und werden vielfach als 50 bis 70%ige Lösungen z. B. für Klebstoff-Formulierungen eingesetzt.

Bei dem erfindungsgemäßen Verfahren tritt eine sehr hohe Viskosität unmittelbar nach der Beschichtung auf. Damit kann ein Verbund z. B. von Etiketten oder Verpackungsmaterial praktisch im Augenblick der Beschichtung fixiert und so erreicht werden, daß sich Verbundmaterialien schon zu diesem frühen Zeitpunkt nicht mehr leicht gegeneinander verschieben lassen.

Die in den folgenden Beispielen angegebenen Teile und Prozente beziehen sich auf das Gewicht. Die darin angegebenen Viskositäten wurden mit einem Rotationsviskosimeter »Rotovisco RV 12« der Firma Haake gemessen und die darin angegebenen K-Werte nach DIN 53 726 in Wasser bestimmt.

## Beispiel 1

(a) Eine in üblicher Weise hergestellte wäßrige Dispersion eines Copolymerisats aus 70 Teilen Ethylen und 30 Teilen Vinylacetat, eines Feststoffgehalts von 44,1% und eines pH-Wertes von 2,2, die Natriumlaurylsulfat als Emulgator enthält, wird unter Rühren bei Raumtemperatur mit 7 Teilen einer 30%igen wäßrigen Polyvinylcaprolactam-Lösung (K-Wert 60) und 20 Teilen einer 70%igen Lösung von Dihydroabietylphthalat in Benzin (Siedebereich 65 bis 95°) gemischt. Das Gemisch hat bei 45°C eine Viskosität von 58 mPa · s. Die Viskosität der Mischung steigt bei Temperaturen unterhalb 40,5°C sprunghaft sehr stark an und die Mischung zeigt mit abnehmender Temperatur zunehmend dilatantes Fließverhalten (vgl. Tabelle 1). Das Gemisch wird mit einer Temperatur von 45°C mit einem Spiralrakel auf Papier-Etiketten in einer Schichtdicke (naß) von 10 μm aufgetragen und die Etiketten mit der beschichteten Seite sofort auf Flaschen aus Niederdruckpolyethylen, deren Oberfläche Raumtemperatur aufweisen, aufgebracht. Es tritt sofort starkes Anziehen der Etiketten auf. Als Anzug wird die Mindestzeit nach der Verklebung definiert, in der bei der Trennung der noch nassen Verklebung Papierausriß eintritt. Dies ist bei dem vorliegenden Beispiel nach $1^1/_2$ Minuten der Fall.

Die Verklebung hat nach dem Trocknen bei Raumtemperatur sehr gute Verklebefestigkeiten auch nach zweistündiger Lagerung bei −10°C oder bei +60°C.

## Tabelle 1

| Temperatur °C | Viskosität mPa · s | Scherverdickung bei Schergeschwindigkeit sec$^{-1}$ |
| --- | --- | --- |
| 23,1 | | 5 |
| 30,3 | 8120 | 15 |
| 35,4 | 2270 | 40 |
| 40,4 | 410 | 136,2 |
| 45,0 | 58 | keine |

(b) Klebt man zum Vergleich Papieretiketten mit einem Gemisch der Copolymerisat-Dispersion und der Harzlösung (ohne Polyvinylcaprolactam-Zusatz) auf die Polyethylenflaschen, so beträgt die minimale Anzugzeit nach der Verklebung 14 Minuten.

(c) Klebt man zum Vergleich Papieretiketten mit einem Gemisch der Polymer-Dispersion und der Harzlösung, die einen Zusatz von 3 Teilen eines Copolymerisats von 60 Teilen Vinylpyrrolidon und 40 Teilen Vinylpropionat, das keine inverse Löslichkeit in Wasser aufweist, so beträgt die minimale Anzugszeit unter sonst gleichen Bedingungen 13 Minuten.

## Patentansprüche

1. Verfahren zum Beschichten von Substraten durch Aufbringen einer wäßrigen emulgatorhaltigen Polymer-Dispersion auf das Substrat in an sich üblicher Weise, wobei die Temperaturen des Substrats und der Polymer-Dispersion voneinander verschieden sind, und Trocknen des beschichteten Substrats, dadurch gekennzeichnet, daß die Polymer-Dispersion 1 bis 10% ihres Gewichtes eines N-Vinyllactampolymerisats mit inverser Löslichkeit in Wasser enthält und eine Temperatur $T_{vs}$ aufweist, bei der sich ihre Viskosität sprunghaft ändert, und die Temperatur des Substrats unterhalb von $T_{vs}$ liegt.

2. Verfahren nach Anspruch 1 dadurch gekennzeichnet, daß die Temperatur $T_{vs}$ zwischen 5 und 80"C liegt und die sprunghafte Viskositätsänderung mindestens 500 mPa · s beträgt.

## Claims

1. A process for coating a substrate by applying an aqueous emulsifier-containing polymer dispersion to the substrate in a conventional manner, the substrate and the polymer dispersion being at different temperatures, and drying the coated substrate, wherein the polymer dispersion contains from 1 to 10% by weight, based on the dispersion, of an N-vinyllactam polymer exhibiting inverse solubility in water, and is at a temperature above the temperature $T_{vs}$ at which its viscosity undergoes an abrupt change, and the temperature of the substrate is below $T_{vs}$.

2. A process as claimed in claim 1, wherein the temperature $T_{vs}$ is from 5 to 80"C and the abrupt change in viscosity is at least 500 mPa · s.

## Revendications

1. Procédé d'enduction de substrate par application d'une dispersion aqueuse de polymère, contenant un émulsionnant, de manière connue en soi sur le substrat, dont la température est différente de celle de la dispersion de polymère, suivie du séchage du substrat revêtu, caractérisé en ce que la dispersion de polymère contient entre 1 et 10% son poids d'un polymère de N-vinyllactame avec une solubilité inverse dans l'eau et se trouve à une température supérieure à la température $T_{vs}$ à laquelle sa viscosité varie brusquement, tandis que la température du substrat est inférieure à la température $T_{vs}$.

2. Procédé suivant la revendication 1, caractérisé en ce que la température $T_{vs}$ se situe entre 5 et 80"C et la variation brusque de la viscosité est au moins égale à 500 mPa · s.